# EUROPEAN PATENT APPLICATION

(11) **EP 4 725 753 A1**
(43) Date of publication of application: **15.04.2026**
(21) Application number: 24205929.3
(22) Date of filing: 10.10.2024
(51) Int. Cl.: B60L 53/65, B60L 53/66, B60L 53/30

(54) **CHARGING OF AN ELECTRIC VEHICLE BY AN ELECTRIC VEHICLE SUPPLY EQUIPMENT**

(71) Applicant: ABB E-mobility B.V., 2629 JG Delft (NL)
(72) Inventor: BALASUBRAMANIAN, Shyam, 2613TC Delft (NL); NEDERSTIGT, Bart, 2311XX Leiden (NL); RODRIGUEZ ESCUDE, Miguel, 3111 PB Schiedam (NL); BECH, Lars, 3119 JA Schiedam (NL); PEETERS, Johan, 3360 Korbeek-Lo (BE)
(74) Representative: Zimmermann & Partner Patentanwälte mbB

(57) **Abstract**

The invention relates to a method for charging an EV by an EVSE and a respective apparatus. The method comprises establishing a physical connection between the EV and the EVSE, initiating a payment authentication process, recognizing, by the EVSE, an EV identifier, entering an energy transfer stage and providing the price for charging on a display. A payment authentication state is defined for the payment authentication process. The payment authentication state comprises at least an ongoing state and an approved state. The energy transfer stage is entered irrespective of whether the payment authentication state is the ongoing state or the approved state. The price for charging is provided on a display mounted to the housing of the EVSE.

## Description

### Technical Field

The present invention relates to a method for charging an electric vehicle, and to a corresponding electric vehicle supply equipment.

### Technical Background

Traditionally, an electric vehicle (EV) is charged by an electric vehicle supply equipment (EVSE). Before the EVSE supplies a charging power to charge the EV, the EVSE requires authentication credentials. The procedure before entering an energy transfer stage is error prone and time consuming. One of the reasons is that the payment authentication process may take longer than expected, resulting in delays and often, aborted procedures caused by time-outs of the EV.

### Description of invention

In view of the above, embodiments of the present invention aim to provide a method for charging an EV by an EVSE and a respective EVSE. The method for charging an EV by an EVSE and the EVSE aim at avoiding at least some of the above-mentioned disadvantages or achieving at least some of the above-mentioned advantages. Specifically, an aspect of the present invention presents a method and an apparatus for charging an EV by an EVSE with reduced risk of time delays or aborted procedures e.g., caused by time-outs of the EV, during the payment authentication process.

The method, according to an aspect of the invention is configured to provide a seamless charging of an EV by an EVSE. A frequent problem of methods for charging an EV by an EVSE is running into a time-out error of the EV. The EV may, after expiry of a time limit, go into a time-out state if the EVSE does not enter an energy transfer stage. To avoid the expiry of the time limit, the EVSE immediately enters the energy transfer stage irrespective of whether the payment authentication state is the ongoing state or the approved state. Entering the energy transfer stage therefore does not require successfully approving a payment authentication process. Hence, the time needed to successfully approve a payment authentication process can exceed the time limit before an EV goes into a time-out state. Due to a display mounted to the housing of the EVSE the operator can immediately be informed about occurring errors or charging specifications.

The method, according to an aspect of the invention, is configured to improve the experience of the user of the EVSE. By recognizing an EV identifier the payment authentication process is facilitated for the user of the EVSE. The method, according to an aspect of the invention, comprises at least one of the following advantages: (a) faster delivery of a charging power; (b) faster successful approval of the payment authentication process; (c) automated successful approval of the payment authentication process; (d) reduced time needed for charging of an EV; and/or (e) manageable risk for the charge point operator for providing charging power without prior successfully approving the payment authentication process.

According to the invention, the method for charging an EV by an EVSE comprises establishing a physical connection between the EV and the EVSE. At least a part of the EVSE is enclosed by a housing. The method further comprises initiating a payment authentication process. A payment authentication state is defined for the payment authentication process. The available payment authentication states comprise at least an ongoing state and an approved state. The payment authentication state is defined as the ongoing state as long as the EVSE is attempting to approve the payment authentication process. The payment authentication state is in the approved state after having successfully approved the payment authentication process. The method further comprises: recognizing, by the EVSE, an EV identifier; entering an energy transfer stage irrespective of whether the payment authentication state is the ongoing state or the approved state; and providing, in the approved state of the payment authentication state, the price for charging on a display. The display is mounted to the housing of the EVSE.

According to an aspect of the invention, the EV identifier corresponds to one of (a) the number plate of the EV; (b) the car connectivity consortium digital key, read-out via Bluetooth or ultra-wideband; (c) the MAC address of the EV; (d) an authenticator according to ISO 15118; or (e) model and/or colour of the EV. Optionally, a combination of multiple EV identifiers are recognized. Preferably, the payment authentication state is dependent on at least one EV identifier. According to an aspect of the invention, the EV identifier is unique for the EV.

According to an aspect of the invention, the EVSE is at least partially enclosed by a housing. A display is mounted to that housing. When charging, the EV is in proximity of the display. Therefore, an operator of the EVSE can immediately react on the information, e.g. an error message, on the display.

According to an embodiment, the housing of the EVSE is visible from the EV. Preferably, the display is visible from the EV. More preferably, the display is visible from the EV such that the price provided on the display is readable. In another embodiment, the display is visible for the user of the EVSE while operating the EVSE. Preferably, the price provided on the display is readable for the user of the EVSE while operating the EVSE.

According to an aspect of the invention, the payment authentication state further comprises a denied state. The payment authentication state is defined as the denied state after the EVSE has reached a termination condition for stopping to approve the payment authentication process, preferably without successfully approving the payment authentication process.

According to an aspect of the invention, the termination condition includes the expiry of a maximum period of time. Preferably, the maximum period of time is adjustable by the charge point operator.

According to an aspect of the invention, the termination condition includes the number of failed attempts reaching, e.g. exceeding, a maximum number of failed attempts. Preferably, the maximum number of failed attempts is adjustable by the charge point operator.

According to an aspect of the invention, the method for charging an EV by an EVSE further comprises supplying a charging power by the EVSE irrespective of whether the payment authentication state is the ongoing state or the approved state. Preferably, the charging power is supplied by the EVSE as soon as the energy transfer stage is entered.

According to an aspect of the invention, the energy transfer stage is entered as soon as the physical connection between the EV and the EVSE is established. Safety checks might be required before the energy transfer stage can be entered.

According to an aspect of the invention, the EV identifier is recognized before a connection between the EV and the EVSE is established.

According to an aspect of the invention, the EVSE delivers a lower first charging power to the EV while the payment authentication state is the ongoing state. The EVSE delivers a higher second charging power to the EV while the payment authentication state is in the approved state. Preferably, the lower first charging power is adjustable by the charge point operator.

According to an aspect of the invention, the method for charging an EV by an EVSE further comprises searching for at least one EV identifier in a database. The database stores information on previous charging attempts of the EV. The first charging power is adjustable dependent on the information retrieved from the database.

According to an aspect of the invention, the method for charging an EV by an EVSE further comprises searching for at least one EV identifier in a database. The database stores information on authentication credentials of the EV. The authentication credentials retrieved from the database are used to approve the payment authentication process.

According to an aspect of the invention, the method further comprises receiving authentication credentials. The EVSE uses the authentication credentials to approve the payment authentication process. Preferably, the authentication credentials are presented, by the driver, to an interface mounted to the housing of the EVSE.

According to an aspect of the invention, the physical connection between the EV and the EVSE includes at least one of (a) electrically connecting the EV to the EVSE by a charging cable; and/or (b) inductively coupling an inductive charging coil of the EV to an inductive charging coil of the EVSE.

According to the invention, an EVSE for charging an EV comprises: a power transfer interface to connect the EVSE to the EV for transferring electrical power from the EVSE to the EV for charging the EV; a housing at least partially enclosing the EVSE; and a payment authentication mechanism. The payment authentication mechanism is configured for carrying out a payment authentication process. A payment authentication state is defined for the payment authentication process. The available payment authentication states comprise at least an ongoing state and an approved state. The payment authentication state is defined as the ongoing state as long as the EVSE is attempting to approve the payment authentication process. The payment authentication state is in the approved state after having successfully approved the payment authentication process. The EVSE further comprises a recognition system. The recognition system is configured to recognize an EV identifier. The EVSE is configured to enter an energy transfer stage. The EVSE enters the energy transfer stage irrespective of whether the payment authentication state is the ongoing state or the approved state. The EVSE further comprises a display mounted to the housing of the EVSE. In the approved state the display provides the price for charging.

According to an aspect of the invention the EVSE further comprises, an electric power supply. The electric power supply is configured to supply a charging power to the power transfer interface for charging the EV. The electric power supply is further configured to supply the charging power irrespective of whether the payment authentication state is the ongoing state or the approved state. Preferably, the electric power supply is further configured to supply a first charging power while the payment authentication state is the ongoing state and a second charging power while the payment authentication state is the approved state. The first charging power is lower than the second charging power and preferably, the first charging power is adjustable by the charge point operator.

According to an aspect of the invention, the first charging power and the second charging power are not constant. Preferably, the first charging power is adjusted depending on an EV identifier recognized after the electric power supply started supplying the first charging power. Preferably, the second charging power is adjusted according to the charging power required by the EV.

According to an aspect of the invention, the EVSE further comprises a connection to a database. The database stores information on authentication credentials of the EV. The EVSE is configured to retrieve authentication credentials of the EV from the database. The authentication credentials retrieved from the database are used to approve the payment authentication process.

According to an aspect of the invention, the EVSE further comprises a connection to a database. The database stores information on previous charging attempts of the EV. The EVSE is configured to retrieve information on previous charging attempts of the EV from the database. The first charging power is adjusted depending on the information retrieved from the database.

According to an aspect of the invention, the database storing information on the authentication credentials and the database storing information on previous charging attempts are separate databases.

According to an aspect of the invention, the database storing information on the authentication credentials and the database storing information on previous charging attempts are the same database.

According to an aspect of the invention, the information retrieved from a database is preprocessed by an external mechanism. The EVSE requests the information from the external mechanism. The external mechanism retrieves the information from a database. The external mechanism analyses the information retrieved from the database and supplies the EVSE with the result of the analysis.

According to an aspect of the invention, the energy transfer stage is entered once the EV sends a power delivery request. Preferably, a positive feedback, by the EVSE, on the power delivery request of the EV is required before an energy transfer stage is entered.

According to an aspect of the invention, the display and the EVSE are connected by at least one wire. Preferably the wire is used to supply the display with power and/or to transmit the price for charging from the EVSE to the display and/or to operate the display.

### Brief description of the figures

In the following, examples of the invention are described in more detail with reference to the drawings. There is shown in
Figure 1 a chart indicating various steps of a method for charging an EV by an EVSE according to one aspect of the invention,
Figure 2 a chart indicating various steps of a method for charging an EV by an EVSE according to another aspect of the invention,
Figure 3 a chart indicating various steps of a method for charging an EV by an EVSE according to another aspect of the invention,
Figure 4 a chart indicating various steps of a method for charging an EV by an EVSE according to another aspect of the invention,
Figure 5 an image of an EVSE connected to an EV,
Figure 6 an image of multiple EVSEs in an EV charging park.

### Detailed description of the figures

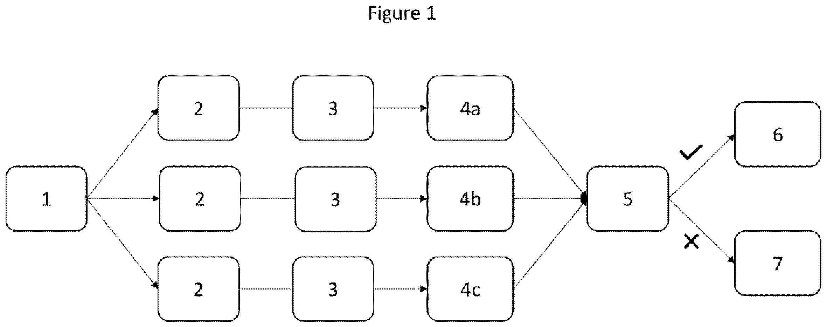

Figure 1 illustrates a possible series of events according to an aspect of the invention. The EVSE (10) recognizes (1) an EV identifier. The EVSE (10) recognizes (1) the EV identifier e.g. by automatic number plate recognition. To do so, a software analyses at least one image of a camera to recognize (1) the number plate of the EV (20). The number plate is used as EV identifier. Alternatively, the EVSE (10) recognizes (1) a digital key transmitted via Bluetooth or ultra-wideband. The digital key is used as an EV identifier. Alternatively, the EVSE (10) recognizes (1) any other EV identifier such as the MAC address of the EV, an authenticator according to ISO 15118, or the model and/or colour of the EV. Subsequently, a connection between the EVSE (10) and the EV (20) is established (2). The payment authentication state is the ongoing state.

After establishing (2) a physical connection between the EV (20) to the EVSE (10), the EVSE (10) enters an energy transfer stage (3). The energy transfer stage is entered (3) irrespective of whether the payment authentication state is the ongoing state or the approved state. The EVSE (10) supplies a first charging power (4). The first charging power (4) depends on the result of the EV (20) recognition (1). If no EV identifier could be recognized (1) the EVSE (10) supplies a first charging power (4c) determined by the charge point operator. If an EV identifier could be recognized (1) the EVSE (10) supplies a first charging power (4a or b) dependent on the information retrieved from a database. E.g. the database stores the information that all previous charging sessions of the EV (20) have been paid. The EVSE (10) will supply a high first charging power (4a). E.g. the database stores the information that the last charging session of the EV (20) has not been paid. Then the EVSE (10) will supply a low first charging power (4b).

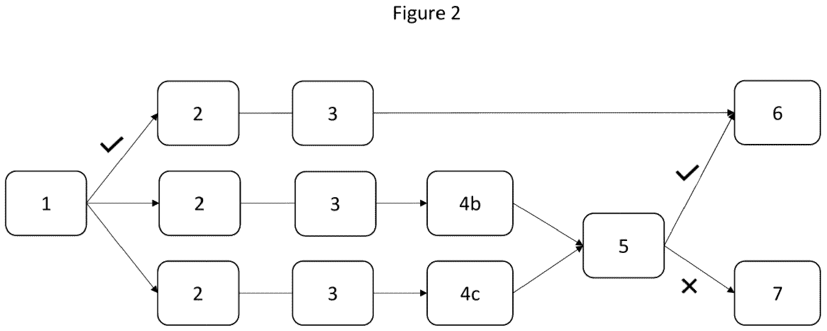

Additionally, the EV identifier can be used to approve the payment authentication process (5), see figure 2. In this case, the EV identifier is used to retrieve authentication credentials from a database. The authentication credentials are used to approve the payment authentication process (5). If the payment authentication process (5) is successfully approved, the payment authentication state is in the approved state and the EVSE (10) supplies a second charging power (6) as soon as a physical connection is established (2). If the EV identifier is not used to approve the payment authentication process (5), the payment authentication state is the ongoing state.

If the payment authentication state is the ongoing state, the payment authentication process (5) is trying to approve authentication credentials. The authentication credentials are provided by a user, e.g. the driver of the EV (20), to an interface (19) mounted to the housing (14) of the EVSE (10). If the payment authentication process (5) approves the authentication credentials, the payment authentication state is in the approved state. In the approved state, the EVSE (10) supplies a second charging power (6) to the EV (20) and the price for charging is provided on a display (18) mounted to the housing (14) of the EVSE (10). If wrong authentication credentials have been provided to the interface (19), the payment authentication state will still be in the ongoing state and the process may be repeated.

The payment authentication state changes in the denied state (7) when the payment authentication process (5) reaches a termination condition. Examples for termination conditions are reaching a maximum period of time and/or reaching a maximum number of failed attempts. For example, the payment authentication state changes in the denied state (7) 5 min after the payment authentication process (5) has started. In another example, the payment authentication state changes in the denied state (7) after presenting invalid authentication credentials for the third time. If the payment authentication state is the denied state (7), no more charging power is supplied.

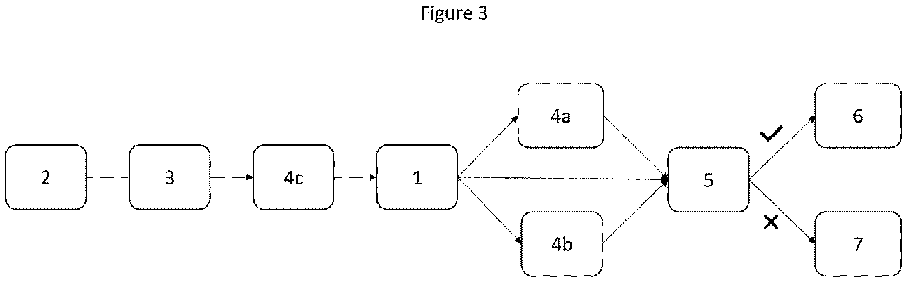

Figure 3 illustrates a possible series of events according to an aspect of the invention. A physical connection between the EV (20) and the EVSE (10) is established (2). The EVSE (10) enters an energy transfer stage (3) and supplies a first charging power (4c). Preferably, the first charging power (4c) is adjustable by the charge point operator.

Subsequently, the EVSE (10) recognizes (1) an EV identifier. Preferably, the EVSE (10) recognizes (1) the EV identifier via the physical connection. Optionally, the EVSE (10) recognizes (1) the EV identifier by automated number plate recognition, by a digital key transmitted via Bluetooth or ultra-wideband, by the MAC address of the EV, an authenticator according to ISO 15118, or the model and/or colour of the EV. If an EV identifier could be recognized (1) the EVSE (10) continuous to supply a first charging power (4) dependent on the information retrieved from a database. E.g. the database stores the information that all previous charging sessions of the EV (20) have been paid. The EVSE (10) will supply a high first charging power (4a). E.g. the database stores the information that the last charging session of the EV (20) has not been paid. The EVSE (10) will supply a low first charging power (4b). If no EV identifier could be recognized (1) or no information on the EV (20) is stored in the database, the first charging power (4) does not change.

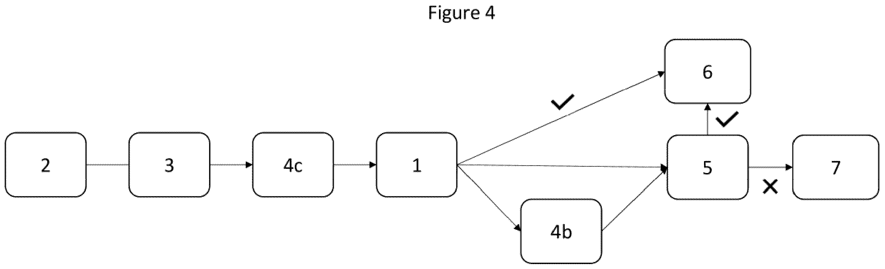

Additionally, the EV identifier can be used to successfully approve the payment authentication process (5), see figure 4. In this case, the EV identifier is used to retrieve authentication credentials from a database. The authentication credentials are used to approve the payment authentication process (5). If the payment authentication process (5) is successfully approved, the payment authentication state is in the approved state and the EVSE (10) supplies a second charging power (6) to the EV (20). If the EV identifier is not used to approve the payment authentication process (5), the payment authentication state is the ongoing state.

If the payment authentication state is the ongoing state, the payment authentication process (5) is trying to approve authentication credentials. The authentication credentials are provided by a user, e.g. the driver of the EV, to an interface (19) mounted to the housing (14) of the EVSE (10). If the payment authentication process (5) approves the authentication credentials, the payment authentication state is in the approved state. In the approved state, the EVSE (10) supplies a second charging power (6) to the EV (20) and the price for charging is provided on a display (18) mounted to the housing (14) of the EVSE (10). If wrong authentication credentials have been provided to the interface (19), the payment authentication state is still in the ongoing state. If wrong authentication credentials have been presented, the process may be repeated.

The payment authentication state changes in the denied state (7) when the payment authentication process (5) reaches a termination condition. Examples for termination conditions are: reaching a maximum period of time and/or reaching a maximum number of failed attempts. For example, the payment authentication state changes in the denied state (7) 5 min after the payment authentication process (5) has started. In another example, the payment authentication state changes in the denied state (7) after presenting invalid authentication credentials for the third time. If the payment authentication state is the denied state (7), no more charging power is supplied.

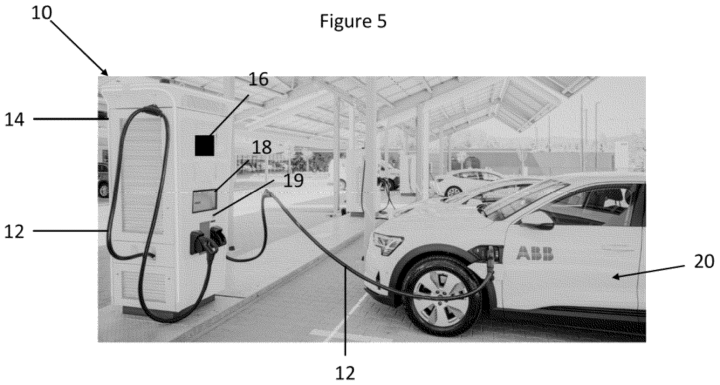

Figure 5 shows an EV (20) connected to an EVSE (10). A cable is used as a power transfer interface (12). Alternatively, the EVSE (10) could comprise a socket, for plugging in a cable, as a power transfer interface (12). Optionally, the power transfer interface (12) is at least one induction coil connected to an electric power supply of the EVSE (10). In this case, at least one induction coil, connected to the electric power supply of the EVSE (10), is inductively coupled to at least one induction coil of the EV (20) for establishing (2) a physical connection.

At least a part of the EVSE (10) is enclosed by a housing (14). In one embodiment, the housing (14) is characterized by at least one of (a) enclosing a recognition system (16), (b) a recognition system (16) being mounted to the housing (14), (c) enclosing a power transfer interface (12), (d) a power transfer interface (12) being mounted to the housing (14), (e) enclosing an interface (19) to receive authentication credentials, (f) an interface (19), for receiving authentication credentials, being mounted to the housing (14), and/or (g) a display (18) being mounted to the housing (14).

According to an aspect of the invention, the EVSE (10) comprises a payment authentication mechanism. The payment authentication mechanism may be a controller, the controller being configured to carry out a payment authentication process (5). A payment authentication state is defined for the payment authentication process (5). The available payment authentication states comprise at least an ongoing state and an approved state. Additional states, such as a denied state, an error state and/or intermediate states, might be available as well.

The payment authentication state is defined as the ongoing state as long as the EVSE (10) is attempting to approve the payment authentication state. The payment authentication state is defined as the approved state after having successfully approved the payment authentication process (5). The payment authentication process (5) may be approved by providing valid authentication credentials. The authentication credentials may be provided (a) by a user via an interface (19), (b) by recognizing (1) an EV identifier, the EV identifier being used as authentication credential, and/or (c) by recognizing (1) an EV identifier, the EV identifier being used to retrieve authentication credentials from a database.

According to an aspect of the invention, the payment authentication state is defined as the denied state after the EVSE (10) has reached a termination condition for stopping attempting to approve the payment authentication process (5). Possible termination conditions include the expiry of a maximum period of time and/or reaching, e.g. exceeding, a maximum number of failed attempts. The maximum number of failed attempts, the maximum period of time, and/or other termination conditions may be defined by the charge point operator.

According to an aspect of the invention, the EVSE (10) comprises a recognition system (16). The recognition system (16) is configured to recognize (1) an EV identifier. The recognition system (16) may be (a) enclosed by the housing (14), (b) mounted to the housing (14) and/or (c) located at a different position. E.g. the recognition system (16) comprises two cameras to perform an automated number place recognition, one camera being mounted to the housing (14) providing an image from one side of the EV (20) and the other camera being located at a different position to provide an image of a different side of the EV (20). The EV identifier, recognized by the recognition system (16), may also be a digital key transmitted via Bluetooth or ultra-wideband, the MAC address of the EV (20) or any other identifier. Preferably, the EV identifier is unique for the EV (20).

According to an aspect of the invention, the EVSE (10) is configured to enter an energy transfer stage (3) irrespective of whether the payment authentication state is the ongoing state or the approved state. The energy transfer stage is entered (3) once the EV (20) sends a power delivery request. Preferably, a positive feedback, by the EVSE (10), on the power delivery request of the EV (20) is required before an energy transfer stage is entered (3). Optionally, the energy transfer stage is entered (3) when the EVSE (10) delivers a charging power to the EV (20).

According to an aspect of the invention, a display (18) is mounted to the EVSE (10). In figure 5, the display (18) is mounted to the side of the housing (14) which is facing the EV (20). According to the invention the display (18) is mounted to any side of the housing (14), e.g. the site opposite to the site facing the EV (20), or any other side. Preferably, the information provided on the display (18) is readable for an operator close to the EV (20). The information provided on the display (18) includes at least the price for charging but can also include other information such as the duration of charging, the remaining time until the EV (20) is fully charged and/or an error message.

According to an embodiment an EVSE (10) comprises multiple power transfer interfaces (12) to supply a charging power to multiple EVs. The payment authentication mechanism is configured to perform a payment authentication process (5) individually for each power transfer interface (12). The recognition system (16) is configured to recognize (1) an EV identifier for each power transfer interface (12) individually. The display (18) is configured to provide the price for charging for each power transfer interface (12) individually. Optionally, multiple displays (18) are mounted to the housing (14) of the EVSE (10). Each display (18) is configured to provide the price for charging of at least one power transfer interface (12). The EVSE (10) enters the energy transfer stage (3) for each power transfer interface (12) individually.

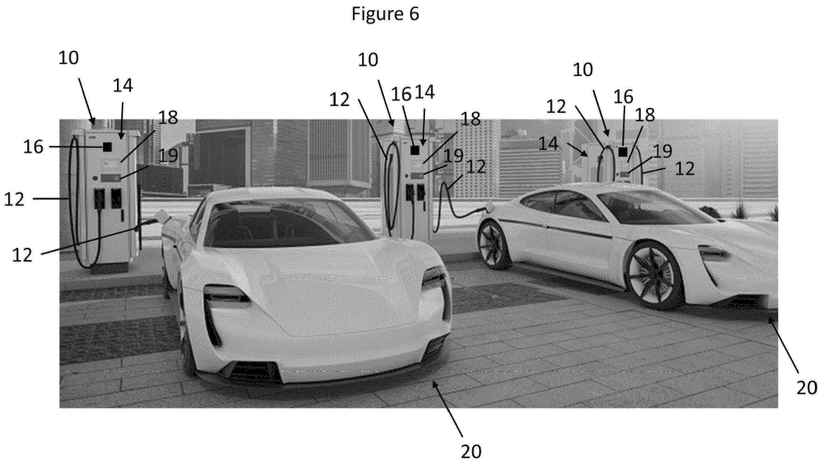

Figure 6 shows an image of an EV (20) charging park. The EV (20) charging park comprises multiple EVSEs (10), each EVSE (10) is configured according to an aspect of the invention. The EVSEs (10) of the EV (20) charging park may share some infrastructure. E.g. the EVSEs (10) share a connection to the electric power grid by sharing a connection to a high voltage source.

According to an aspect of the invention, the recognition system (16) recognizes (1) an EV identifier by being provided with an EV identifier previously recognized by a recognition infrastructure. E.g. the recognition infrastructure comprises at least one camera for recognizing (1) an EV identifier, the recognition infrastructure additionally being able to identify to which EVSE (10) the EV (20) establishes (2) a physical connection. The recognition infrastructure provides the EV identifier to the respective recognition system (16) of that EVSE (10).

According to an aspect of the invention, each EVSE (10) of the EV (20) charging park comprises a power transfer interface (12), a housing (14), a payment authentication mechanism, a recognition system (16) and a display (18) mounted to the housing (14).

According to an aspect of the invention, the method for charging of an EV (20) by an EVSE (10) can similarly be applied to charging an EV (20) by an EVSE (10), the EVSE (10) being part of an EV (20) charging park. The charging of an EV (20) by an EVSE (10), the EVSE (10) being part of an EV (20) charging park comprises, establishing (2) a physical connection between the EV (20) and the EVSE (10); initiating a payment authentication process (5); recognizing (1), by the EVSE (10), an EV identifier; entering an energy transfer stage (3); providing, in the approved state of the payment authentication state, the price for charging on a display (18), the display (18) being mounted to the housing (14) of the EVSE (10).

According to an aspect of the invention, the EVSE (10) recognizes (1) the EV identifier by being provided with the EV identifier from a recognition infrastructure. E.g. the recognition infrastructure comprises at least one camera for recognizing (1) an EV identifier. The recognition infrastructure additionally identifies to which EVSE (10) the EV (20) establishes (2) a physical connection. The recognition infrastructure provides the EV identifier to the respective recognition system (16) of that EVSE (10). The EVSE (10) recognizes (1) the provided EV identifier.

The EVSE may be in accordance with any standard(s) as defined in ISO15118/DIN. The EVSE may be implemented with any application layer(s) defined for the communication between the EV and EVSE For example, the EVSE may be implemented according to CCS and/or MCS standard / protocol.

### List of reference signs

- 1: recognizing
- 2: establishing a physical connection
- 3: entering the energy transfer stage
- 4: first charging power
- 5: payment authentication process
- 6: second charging power
- 7: denied state
- 10: EVSE
- 12: power transfer interface
- 14: housing
- 16: recognition system
- 18: display
- 19: interface
- 20: EV

## Claims

1. A method for charging an electric vehicle, EV (20), by an electric vehicle supply equipment, EVSE (10), the method comprising:
establishing a physical connection (7) between the EV (20) and EVSE (10);
wherein at least a part of the EVSE (10) is enclosed by a housing (14);
initiating a payment authentication process (5), wherein a payment authentication state is defined for the payment authentication process (5), wherein the set of available payment authentication states comprises at least an ongoing state and an approved state;
wherein the payment authentication state is defined as the ongoing state as long as the EVSE (10) is attempting to approve the payment authentication process (5);
wherein the payment authentication state is defined as the approved state after having successfully approved the payment authentication process (5);
recognizing (1), by the EVSE (10), an EV identifier;
entering an energy transfer stage (3) irrespective of whether the payment authentication state is the ongoing state or the approved state;
providing, in the approved state of the payment authentication state, the price for charging on a display (18);
wherein the display (18) is mounted to the housing (14) of the EVSE (10).

2. A method according to claim 1,
wherein the set of available payment authentication states further comprises a denied state;
wherein the payment authentication state is defined as the denied state after the EVSE (10) has reached a termination condition for stopping attempting to approve the payment authentication process (5).

3. A method according to claim 2,
the termination condition includes the expiry of a maximum period of time;
wherein preferably the maximum period of time is adjustable by the charge point operator.

4. A method according to claim 2 or 3,
the termination condition includes the number of failed attempts reaching a maximum number of failed attempts;
wherein preferably the maximum number of failed attempts is adjustable by the charge point operator.

5. A method according to any previous claim, further comprising:
Supplying a charging power (4, 6) by the EVSE (10) irrespective of whether the payment authentication state is the ongoing state or the approved state

6. A method according to claim 5,
wherein a charging power (4, 6) is supplied by the EVSE (10) as soon as the energy transfer stage is entered (3).

7. A method according to any of the previous claims,
wherein recognizing (1) an EV identifier is performed before establishing a physical connection (2) between the EV (20) and EVSE (10).

8. A method according to claim 5 or 6, comprising
delivering, by the EVSE (10), a lower first charging power (4) to the EV (20) while the payment authentication state is in the ongoing state; and
delivering, by the EVSE (10), a higher second charging power (6) to the EV (20) while the payment authentication state is in the approved state.

9. A method according to claim 8, further comprising:
searching for the EV identifier in a database;
wherein the database stores information on previous charging attempts of the EV;
wherein the first charging power (4) is adjustable dependent on the information retrieved from the database.

10. A method according to any previous claim, further comprising:
receiving authentication credentials;
wherein the EVSE (10) uses the authentication credentials to approve the payment authentication process (5);
wherein the authentication credentials are presented by the driver to an interface (19) mounted to the EVSE (10).

11. A method according to any previous claim,
wherein the establishing of the physical connection (2) between the EV (20) and EVSE (10) includes at least one of (a) electrically connecting the EV (20) to the EVSE (10) by a charging cable; and (b) inductively coupling an inductive charging coil of the EV (20) to an inductive charging coil of the EVSE (10).

12. An electric vehicle supply equipment, EVSE (10), for charging an electric vehicle, EV (20), the EVSE (10) comprising:
a power transfer interface (12) to connect the EVSE (10) to the EV (20) for transferring electrical power from the EVSE (10) to the EV (20) for charging the EV;
a housing (14) at least partially enclosing the EVSE (10);
a payment authentication mechanism, wherein the payment authentication mechanism is configured for carrying out a payment authentication process (5), wherein a payment authentication state is defined for the payment authentication process (5), wherein the set of available payment authentication states comprises at least an ongoing state and an approved state;
wherein the payment authentication state is defined as the ongoing state as long as the EVSE (10) is attempting to approve the payment authentication process (5);
wherein the payment authentication state is defined as the approved state after having successfully approved the payment authentication process (5);
a recognition system (16);
wherein the recognition system (16) is configured to recognize (1) an EV identifier;
wherein the EVSE (10) is configured to enter an energy transfer stage (3);
wherein the EVSE (10) enters the energy transfer stage (3) irrespective of whether the payment authentication state is the ongoing state or the approved state;
a display (18) mounted to the housing (14) of the EVSE (10);
wherein the display (18) provides, in the approved state, the price for charging.

13. The EVSE of claim 12,
an electric power supply for supplying a charging power (4, 6) to the power transfer interface (12) for charging the EV;
wherein the electric power supply is configured to supply the charging power (4, 6) irrespective of whether the payment authentication state is the ongoing state or the approved state;
wherein the electric power supply is configured to supply a first charging power (4) while the payment authentication state is the ongoing state;
wherein the electric power supply is configured to supply a second charging power (6) while the payment authentication state is the approved state;
wherein the first charging power (4) is lower than the second charging power (6);
wherein preferably the first charging power is adjustable by the charge point operator.

14. The EVSE of claim 12 or 13, further comprising:
a connection to a database;
wherein the database stores information on authentication credentials of EVs;
wherein the EVSE (10) is configured to retrieve authentication credentials of the EV (20) from the database;
wherein the payment authentication retrieved from the database is used to approve the payment authentication process (5).

15. The EVSE of claim 13 or 14, further comprising:
a connection to a database;
wherein the database stores information on previous charging attempts of EVs;
wherein the EVSE (10) is configured to retrieve information on previous charging attempts of the EV (20) from the database;
wherein the first charging power (4) is adjusted depending on the information retrieved from the database.
